# EUROPEAN PATENT APPLICATION

(11) **EP 3 719 792 A1**
(43) Date of publication of application: **07.10.2020**
(21) Application number: 18883480.8
(22) Date of filing: 23.10.2018
(51) Int. Cl.: G10K 11/16, B32B 5/26, D04H 3/14, G10K 11/162

(54) **POROUS FIBER SHEET**

(30) Priority: 28.11.2017 JP 2017227447
(71) Applicant: Nitto Denko Corporation, Ibaraki-shi, Osaka 567-8680 (JP)
(72) Inventor: OTSUKA, Tetsuya, Ibaraki-shi Osaka 567-8680 (JP); MAIKAWA, Hidetoshi, Ibaraki-shi Osaka 567-8680 (JP); ISHIGURO, Shigeki, Ibaraki-shi Osaka 567-8680 (JP)
(74) Representative: Cabinet Beau de Loménie
(86) International application number: PCT/JP2018/039361
(87) International publication number: WO 2019/107019

(57) **Abstract**

This porous fiber sheet is formed using fibers having an average fiber diameter of 0.5 µm to 20 µm. If the total volume of solid and gap per unit volume is 100%, the percentage of solid is 1.3% to 8%.

## Description

### TECHNICAL FIELD

The present invention relates to a porous fiber sheet.

### BACKGROUND ART

A porous fiber sheet that attenuates sound waves has been developed as a noise reduction measure for vehicles, buildings, household electrical appliances, and the like. (see, for example, Patent Document 1). The porous fiber sheet of Patent Document 1 has a C-shaped structure. The porous fiber sheet includes C-shaped and directly formed fibers and staple fibers having a crimp dispersed between the directly formed fibers.

### PRIOR ART DOCUMENTS

### PATENT DOCUMENTS

Patent Document 1: Japanese Laid-Open Patent Application Publication No. 2006-506551

### SUMMARY OF THE INVENTION

### PROBLEM TO BE SOLVED BY THE INVENTION

Although sound insulation and a reduction in weight of porous fiber sheets have been required for a long time, there is a problem of decreasing the sound insulation properties when the thickness is reduced due to the reduction in weight.

The present invention is made to solve above-described problems, and the main object of the present invention is to provide a porous fiber sheet that balances sound insulation and a weight reduction.

### MEANS FOR SOLVING THE PROBLEM

To solve the above-described problem, according to an aspect of the present invention, there is provided a porous fiber sheet including:
fibers having an average diameter of 0.5 µm or more and 20 µm or less,
wherein a solid percentage is 1.3% or more and 8% or less when a total volume of a solid and a gap in a unit volume is taken as 100%.

### ADVANTAGEOUS EFFECT OF THE INVENTION

According to an aspect of the present invention, a porous fiber sheet can balance sound insulation and a weight reduction.

### BRIEF DESCRIPTION OF THE DRAWINGS

Fig. 1 is a perspective view showing a porous fiber sheet according to a first embodiment;
Fig. 2 is a perspective view showing a first modification of a porous fiber sheet;
Fig. 3 is a perspective view showing a second modification of a porous fiber sheet;
Fig. 4 is a diagram showing a method of manufacturing a porous fiber sheet according to a first embodiment;
Fig. 5 is a diagram showing a nonwoven layer formed between two collectors;
Fig. 6 is a perspective view showing a porous fiber sheet according to a second embodiment;
Fig. 7 is a diagram showing a method of manufacturing a porous fiber sheet according to a second embodiment;
Fig. 8 is a diagram showing a porous fiber sheet as a transversely oriented product obtained in Example 1; and
Fig. 9 is a diagram showing a porous fiber sheet as a longitudinally oriented product obtained in Example 5.

### EMBODIMENTS FOR CARRYING OUT THE INVENTION

Hereinafter, embodiments of the present invention will be described with reference to the drawings. In each drawing, the description is omitted for the same or corresponding configuration with the same or corresponding reference numerals.

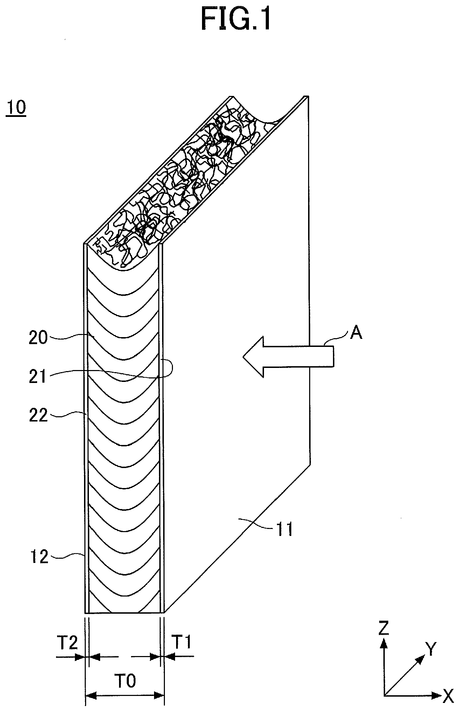

Fig. 1 is a perspective view showing a porous fiber sheet according to a first embodiment. In Fig. 1, the X direction, Y direction and Z direction are perpendicular to each other. The X direction is the thickness direction of the porous fiber sheet. The Y direction and Z direction are an in-plane direction of the porous fiber sheet. The Z direction is a direction in which a plurality of nonwoven layers is arranged.

In FIG. 1, an arrow A represents the incident direction of a sound wave with respect to the porous fiber sheet 10. Note that the sound wave is incident perpendicular to the main surface 11 of the porous fiber sheet 10 in FIG. 1, but may be incident at an oblique angle. Also, the sound wave may be incident from both sides of the porous fiber sheet 10 and may be incident on both of the two main surfaces 11, 12.

The porous fiber sheet 10 attenuates the incident sound wave. The porous fiber sheet 10 attenuates the incident sound wave by converting the energy of the incident sound wave to thermal energy. When the sound wave enters the porous fiber sheet 10, because the air vibrates within the porous fiber sheet 10, friction occurs between the fibers forming the porous fiber sheet 10 and the air, and the energy of the sound wave is converted to thermal energy.

The porous fiber sheet 10 may be used as a sound absorbing material or as a sound insulating material. The sound absorbing material is used to inhibit the reflection of a sound wave incident from a sound source. The sound insulating material is used to inhibit transmission of a sound wave incident from a sound source. The porous fiber sheet 10 may also serve as both the sound absorbing material and the sound insulating material.

The porous fiber sheet 10 is used to control noises in vehicles, buildings, household electrical appliances, large electrical apparatuses, and the like. The vehicles include, for example, automobiles, trains and airplanes. The vehicle noises include a running noise, a reflected noise from a tunnel and a sound barrier wall, and an operating noise from on-board equipment (for example, air conditioners and engines) in a vehicle. The buildings include, for example, factories, movie theaters, karaoke boxes, music halls, and the like. Examples of household electrical appliances include refrigerators, vacuum cleaners, air conditioner outdoor units, household storage batteries, and hot water washing toilet seats. Examples of large electrical apparatuses include industrial refrigerators.

The porous fiber sheet 10 may be formed of organic fibers. The organic fiber materials include general-purpose plastics, engineering plastics and super engineering plastics. The general-purpose plastics include polypropylene (PP), polyethylene (PE), polyurethane (PU), polylactic acid (PLA) and acrylic resins (for example, PMMA). The engineering plastics include polyethylene terephthalate (PET), nylon 6 (N6), nylon 6,6 (N66) and nylon 12 (N12). The super engineering plastics include polyphenylene sulfide (PPS) and liquid crystal polymers (LCP). The porous fiber sheet 10 may be formed of one type of organic fibers or may be formed of more than one type of organic fibers.

The porous fiber sheet 10 according to the present embodiment is formed of organic fibers, but may be formed of inorganic fibers. Examples of the inorganic fibers include glass fibers and carbon fibers. The organic fibers and the inorganic fibers may be combined with each other.

The average fiber diameter of the porous fiber sheet 10 is 0.5 *µ*m or more and 20 *µ*m or less. If the average fiber diameter of the porous fiber sheet 10 is 0.5 *µ*m or more, it is easy to manufacture the porous fiber sheet 10, and the strength of the porous fiber sheet 10 is sufficient. On the other hand, when the average fiber diameter of the porous fiber sheet 10 is 20 µm or less, because the surface area of the fibers per unit volume is large, friction between the fibers and the air is easily generated and the sound wave can be effectively attenuated. The average fiber diameter of the porous fiber sheet 10 is preferably 1 µm or more and 15 µm or less, and more preferably 1.5 µm or more and 10 µm or less.

The porous fiber sheet 10 is composed of a solid material, such as fibers with an average fiber diameter of 0.5 *µ*m or more and 20 *µ*m or less, and a gap is formed between the fibers. To improve the sound insulation properties of the porous fiber sheet 10, the inventor of the present invention focused on the solid occupancy S, which had not been noticed in the conventional related art.

The solid occupancy S is the percentage of solids when the total volume of solids and gaps in the unit volume of the porous fiber sheet 10 is taken as 100%. That is, the solid occupancy S is the value obtained by dividing the bulk density (BD) of the porous fiber sheet 10 by the true density (TD) of the solid (BD/TD) and multiplying by 100 (BD/TD×100). The solid occupancy S is equal to the value obtained by subtracting the gap percentage from 100.

The larger the solid occupancy S, the larger the contact area between air and fibers having an average fiber diameter of 0.5 *µ*m or more and 20 *µ*m or less, and the higher the efficiency of converting sound wave energy to thermal energy due to the friction between the fibers and the air, thereby improving the sound insulation. In contrast, the smaller the solid occupancy S, the smaller the density and the lighter the weight.

In the present embodiment, the solid occupancy S is not less than 1.3% and not more than 8%. When the solid occupancy S is 1.3% or more, the sound wave is likely to be attenuated by the friction between the fibers and the air where the average fiber diameter is 0.5 *µ*m or more and 20 µm or less, and the attenuation constant of 8 Neper/m or more can be achieved. In addition, when the solid occupancy S is 8% or less, the weight can be reduced. The solid occupancy S is preferably 1.35% or more and 7% or less, and more preferably 1.4% or more and 6% or less.

The solid primarily includes fibers with an average fiber diameter of 0.5 *µ*m or more and 20 *µ*m or less. The solid may include fibers having a fiber diameter of 10 *µ*m or more and 30 *µ*m or less. It is sufficient that the average fiber diameter is not less than 0.5 *µ*m and not more than 20 µm. The solid may also include low melting point fibers or tacky fibers for retaining the shape of the porous fiber sheet 10. In addition, the solid may contain antioxidants, porous stabilizers, viscosity modifiers, colorants, and the like, to the extent that it does not impair sound wave insulation.

The total thickness T0 of the porous fiber sheet 10 is, for example, 1 mm or more and 100 mm or less. If the total thickness T0 is 1 mm or more, the shape of the porous fiber sheet 10 can be maintained. In contrast, when the total thickness T0 is 100 mm or less, the weight of the porous fiber sheet 10 can be reduced.

The porous fiber sheet 10 includes a plurality of nonwoven fabric layers 20 that are separably and continuously arranged in a predetermined in-plane direction (in the Z direction in FIG. 1) between two opposing main surfaces 11, 12. Each of the plurality of nonwoven layers 20 is made from a plurality of fibers that are intertangled as seen from a predetermined in-plane direction (in the Z direction in FIG. 1). Adjacent nonwoven layers 20 can be easily peeled off at the interfaces from each other.

To enhance the peel strength of adjacent nonwoven layers 20, crimped fibers connecting the nonwoven layers 20 may be inserted, but such crimped fibers are not inserted in the present embodiment. Because the fiber diameter is large and the specific surface area is small, the energy attenuation by the viscous resistance of the air is unlikely to be obtained, and the attenuation coefficient becomes small.

A sound wave is a longitudinal wave (dense wave) that propagates through vibrations of air density. As the density of air changes in the gaps formed between fiber and fiber, a pressure change caused by the change in the density of air occurs in the fiber. If the same pressure change occurs simultaneously at any part of a single fiber, the fiber resonates. The fiber resonates, for example, when the fiber is positioned perpendicular to the direction of propagation of the sound wave.

The larger the number of resonant fibers, the less likely the sound wave is to be absorbed because the propagation of the sound wave is easily blocked and the sound wave is more likely to be reflected. The difficulty of sound wave transmission can be evaluated with characteristic impedance. The higher the characteristic impedance, the more likely the propagation of the sound wave is hindered and the more likely the sound wave is reflected, thereby reducing sound absorption properties.

Also, as the number of resonant fibers increases, the sound wave propagation is more likely hindered and the attenuation of the sound wave caused by the friction between the air and the fiber is more likely prevented.

According to the present embodiment, as described above, a plurality of nonwoven layers 20 is separably and continuously arranged in the Z-direction. Therefore, when a sound wave is incident in the X direction as shown by an arrow A in Fig. 1, the number of fibers perpendicular to the direction of propagation of the sound wave can be decreased in each nonwoven fabric layer 20, and the resonance of the fibers can be inhibited in each nonwoven fabric layer 20. As a result, the characteristic impedance of 1400 N·s/m³ or less can be achieved, and good sound absorption can be achieved. In addition, the attenuation constant can be further improved. A structure in which a plurality of nonwoven layers 20 is continuously arranged in the Z-direction is referred to as a longitudinal orientation.

If only the characteristic impedance (i.e., the impedance of sound wave transmission) is reduced, it may be possible to reduce the solid occupancy S to less than 1.3% (i.e., increase in the gap ratio to 98.7% or more). In this case, because the attenuation constant is too small and the sound insulation properties deteriorate, the solid occupancy S is set to be 1.3% or more in the present embodiment. By setting the solid occupancy S to 1.3% or more and adopting a longitudinally oriented structure, sound insulation and sound absorption can be achieved simultaneously. This is particularly useful in applications that require the function of both of the sound insulating material and the sound absorbing material.

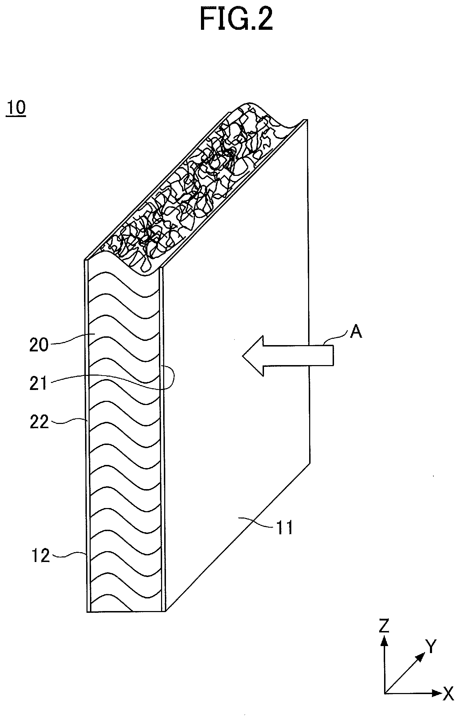

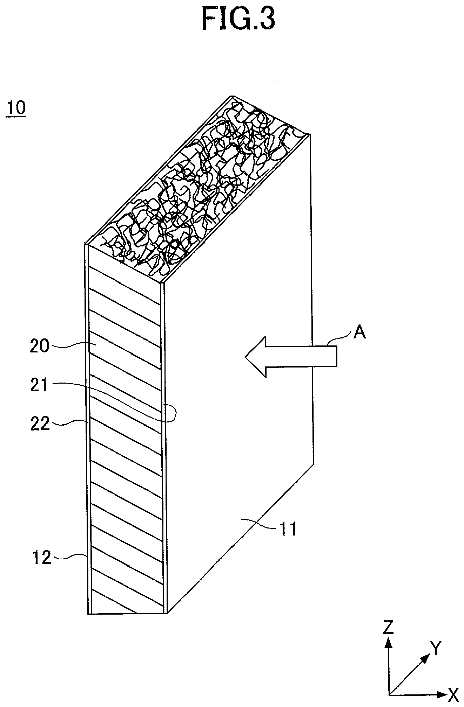

The nonwoven layer 20 is formed in a C-shape as seen in the Y direction as shown in Fig. 1. The shape of the nonwoven layer 20 as seen in the Y direction is C-shaped in the present embodiment, but is not particularly limited. For example, the nonwoven layer 20 may be formed in a wavelike fashion as shown in Fig. 2 or may be linearly shaped as shown in Fig. 3. The shape of the nonwoven layer 20 as seen in the Y direction is a line diagonal to the Z direction in Fig. 3, but may be a line perpendicular to the Z direction.

The porous fiber sheet 10 has a skin layer 21 on one of the two opposing main surfaces 11, 12 and a skin layer 22 on the other main surface 12. The two skin layers 21, 22, are each items of intertangled fibers (i.e., nonwoven fabrics) as seen in the thickness direction (the X direction in Fig. 1).

A plurality of nonwoven layers 20 is provided between the two skin layers 21, 22, and each of the nonwoven layers 20 is formed to be continuous with the two skin layers 21, 22. The thickness of each of the skin layers 21, 22 is thin, and when adjacent nonwoven layers 20 are peeled off at the interface from each other, each of the skin layers 21, 22 become separated from each other at the extended plane of the interface.

The thickness T1 of the skin layer 21 and the thickness T2 of the skin layer 22 are 0.01 mm or more and 5 mm or less. If the thickness T1 and the thickness T2 are each 0.01 mm or more, unintentional peeling at the interface of adjacent nonwoven layers 20 can be inhibited, and the shape is maintained. On the other hand, if each of the thickness T1 and the thickness T2 is 5 mm or less, the sound wave reflection by the skin layer 21 can be reduced, and the attenuation of the sound wave in the nonwoven layer 20 can be increased. The thicknesses T1 and T2 are each preferably 0.3 mm or more and 4 mm or less, and more preferably 0.6 mm or more and 3 mm or less.

The porous fiber sheet 10 may be supported by a support layer, such as an aluminum foil or a nonwoven fabric, for retaining the shape. The support layer may be provided on both sides of the porous fiber sheet 10 or on one side of the porous fiber sheet 10.

The method of manufacturing the porous fiber sheet 10 is not particularly limited, but a melt spinning method is suitable, and a melt blown method is particularly suitable. The melt blown process involves blowing molten thermoplastic resin out of the nozzle and stretching it into a fiber state at a high temperature and in a high-speed airflow to spin the fibers on a collector. Thermoplastic resins include at least one of a polyolefinic resin, a polyester resin, and a polyamide resin.

The method of manufacturing the porous fiber sheet 10 is not limited to the melt blown method, and may be, for example, an electric field spinning method. According to the melt blown method and the electric field spinning method, a nonwoven fabric is obtained. The electric field spinning method allows for the spinning of not only organic fibers but also inorganic fibers.

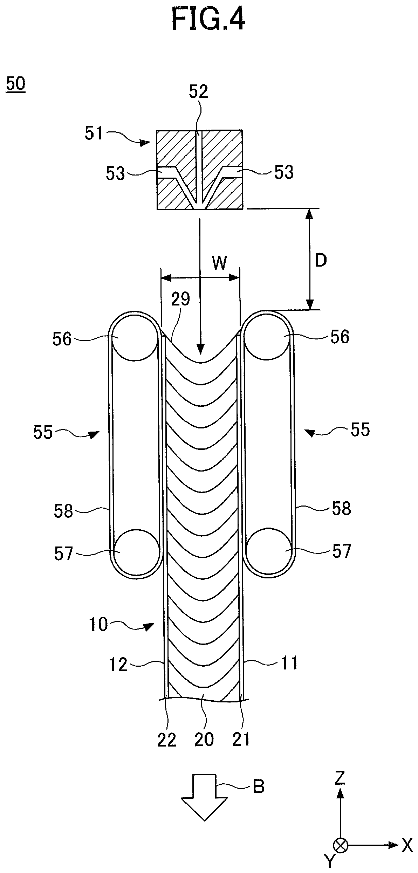

Fig. 4 is a perspective view illustrating a method of manufacturing a porous fiber sheet according to a first embodiment. The X direction, Y direction and Z direction in Fig. 4 are the same as the X direction, Y direction and Z direction in Fig. 1. In Fig. 4, an arrow B is the direction of conveyance (Z direction) of the porous fiber sheet 10. The manufacturing apparatus 50 for manufacturing the porous fiber sheet 10 includes a die 51 and two collectors 55, as shown in Fig. 4.

The die 51 includes a resin nozzle 52 for discharging molten resin and gas nozzles 53 for discharging gas such as air. The resin nozzle 52 discharges the molten resin vertically downward, for example. The gas nozzles 53 are disposed on both sides of the resin nozzle 52 in the X-direction, and each of the resin gas nozzles 53 discharges high temperature gas diagonally downward so as to intersect the flow of molten resin discharged from the resin nozzle 52. The discharge port of the resin nozzle 52 and the discharge ports of the gas nozzles 53 are disposed on the lower surface of the die 51 spaced apart in the Y-direction. In the present embodiment, the discharge direction of the resin nozzle 52 is in the Z direction (in more detail, the vertical downward direction), but the discharge direction may be inclined with respect to the Z direction.

The opposing surfaces of the two collectors 55 are parallel, and each of the two collectors 55 is perpendicular to the X direction. A conveyance path of the porous fiber sheet 10 is formed between the opposing surfaces of the two collectors 55. The porous fiber sheet 10 is conveyed along with the endless belt 58 in the Z-direction (more specifically vertically downward) and is bent and horizontally conveyed after passing the space between the two collectors 55. The total thickness T0 of the porous fiber sheet 10 (see FIG. 1) is smaller than the distance W between the two collectors 55, for example, due to the self-weight and the like. The distance W between the two collectors 55 is constant in the present embodiment as shown in Fig. 4, but may be narrowed or widened from the upstream side to the downstream side in the conveying direction.

Each of the collectors 55 has, for example, a first pulley 56, a second pulley 57, and an endless belt 58 passing the path between the first pulley 56 and the second pulley 57. The axial direction of each of the rotational axes of the first pulley 56 and the second pulley 57 is the Y direction. At least one of the first pulley 56 and the second pulley 57 is a drive pulley that is rotated by a drive unit such as a rotary motor. By continuously rotating the drive pulley, the porous fiber sheet 10 is continuously conveyed along the endless belt 58.

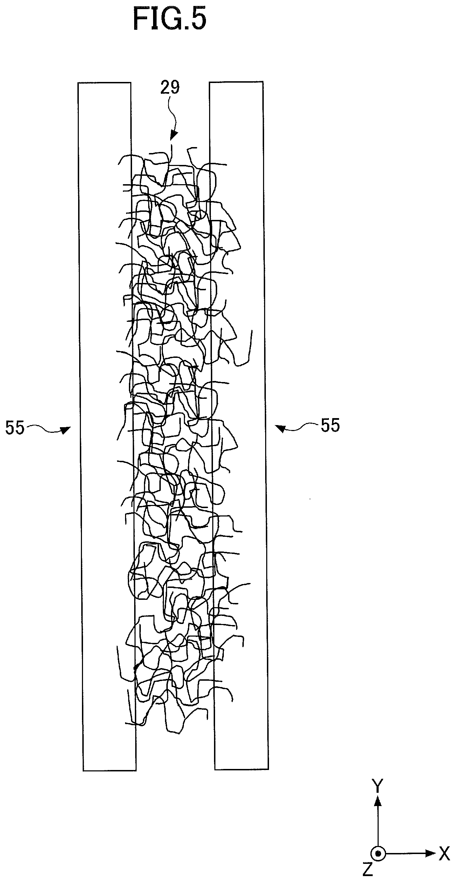

Fig. 5 is a diagram illustrating a fiber layer that passes the path between the two collectors shown in Fig. 4. The molten resin discharged from the resin nozzle 52 is stretched in the form of fibers at a high-speed airflow discharged from the gas nozzle 53, thereby forming a fiber layer 29. The fiber layer 29 is a nonwoven fabric in which a plurality of fibers are intertangled as seen in the Z-direction view.

The fiber layer 29 bridges the path between the two collectors 55 spaced in the X direction as seen in the Z-direction view. The X-direction end of the fiber layer 29 is adhered near the upper end of the endless belt 58 as shown in FIG. 4. The upper end of the endless belt 58 is secured to the outer circumference of the first pulley 56 and changes the orientation as the first pulley 56 rotates. This causes the X-direction end of the fiber layer 29 to change its orientation, thereby forming the skin layers 21, 22. Meanwhile, the central portion of the fiber layer 29 in the X direction becomes the nonwoven fabric layer 20.

Note that each of the collectors 55 has an endless belt 58 in the present embodiment but does not need to have an endless belt 58. The at least one collector 55 may be comprised of a roll in direct contact with the porous fiber sheet 10. In this case, the roll may include a suction source for suctioning the porous fiber sheet 10.

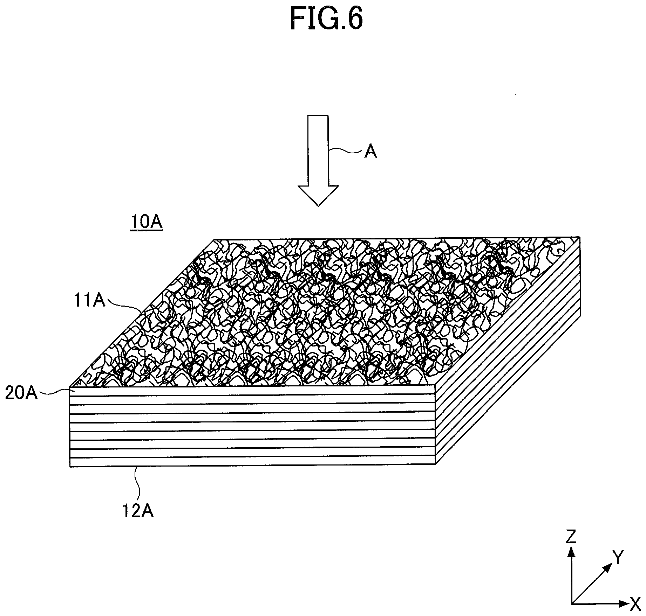

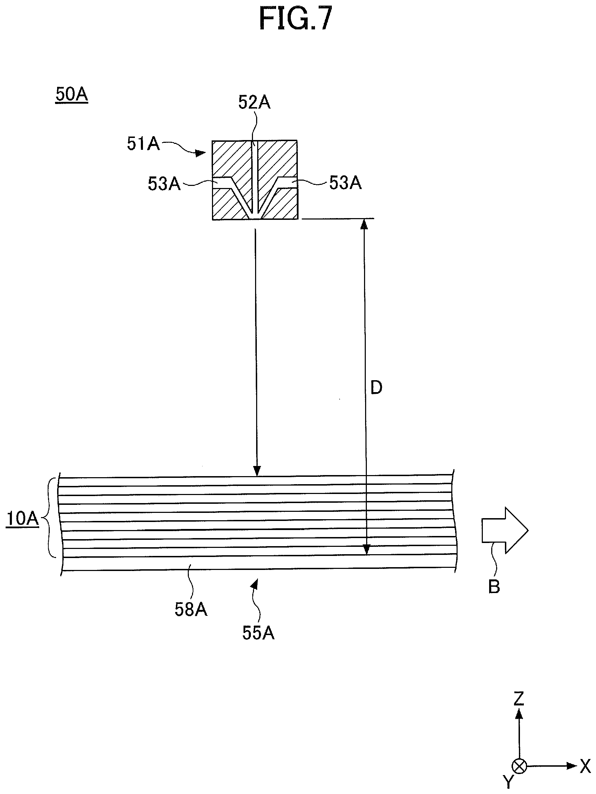

In the above-described first embodiment, a plurality of nonwoven layers is arranged continuously in an in-plane direction, but in the below-described second embodiment, a plurality of nonwoven layers is continuously arranged in a thickness direction. Hereinafter, major differences will be explained with reference to Figs. 6 and 7. A structure in which a plurality of nonwoven layers is arranged continuously in an in-plane direction is referred to as a longitudinal orientation, and a structure in which a plurality of nonwoven layers is arranged continuously in a thickness direction is similarly referred to as a transverse orientation.

Fig. 6 is a perspective view showing a porous fiber sheet according to a second embodiment. In Fig. 6, the X direction, the Y direction and the Z direction are perpendicular to each other. In Fig. 6, unlike Figs. 1 to 5 and the like, the Z direction is the thickness direction of the porous fiber sheet. The X and Y directions are the in-plane directions of the porous fiber sheet.

In FIG. 6, an arrow A represents the incident direction of the sound wave relative to the porous fiber sheet 10A. Note that in FIG. 6, the sound wave is incident perpendicular to the main surface 11A of the porous fiber sheet 10A, but may be incident diagonally. Also, sound waves may be incident from both sides of the porous fiber sheet 10A and may be incident on both sides of the two main surfaces 11A, 12A.

The average fiber diameter of the porous fiber sheet 10A is not less than 0.5 *µ*m and not more than 20 *µ*m, the same as the average fiber diameter of the porous fiber sheet 10A according to the first embodiment. Further, the solid occupancy S of the porous fiber sheet 10A according to the present embodiment is not less than 1.3% and not more than 8%, the same as the solid occupancy S of the porous fiber sheet 10 according to the first embodiment. Therefore, according to the present embodiment, similarly to the above-described first embodiment, the sound wave is easily attenuated by the friction between the fibers and the air having the average fiber diameter of 0.5 µm or more and 20 µm or less, and it is possible to achieve the attenuation constant of 8 Neper/m or more. Also, it is possible to reduce weight.

The porous fiber sheet 10A has a plurality of nonwoven fabric layers 20A separably and continuously arranged in a thickness direction (in Fig. 6, in the Z direction). Each of the plurality of nonwoven layers 20A is one in which a plurality of fibers are intertangled as seen in a thickness direction. Adjacent nonwoven layers 20A can be easily peeled off at the interfaces from each other.

Fig. 7 is a perspective view showing a method of manufacturing a porous fiber sheet according to a second embodiment. The X direction, Y direction, and Z direction in Fig. 7 are the same as the X direction, Y direction, and Z direction in Fig. 6. In Fig. 7, an arrow B is the direction of conveyance (X direction) of the porous fiber sheet.

A manufacturing apparatus 50A for manufacturing a porous fiber sheet 10A includes a die 51A and a collector 55A, as shown in FIG. 7. The die 51A has a resin nozzle 52A and gas nozzles 53A, similarly to the die 51 of the first embodiment. In the present embodiment, the discharge direction of the resin nozzle 52A is in the Z direction (in more detail, in the vertical downward direction), but the discharge direction may be inclined with respect to the Z direction.

The collector 55A has an endless belt 58A passing between a first pulley and a second pulley, which are not shown in the drawing. The top surface of the endless belt 58A may be a horizontal surface perpendicular to the Z direction. The porous fiber sheet 10A is conveyed in the X direction with the endless belt 58A while being gradually formed on the top surface of the endless belt 58A.

### [Example]

Hereinafter, specific examples and comparative examples will be described. Examples 1 to 8 described below include Examples 1 to 3 and Examples 5 to 7, and Examples 4 and 8 are comparative examples.

### [Example 1]

In Example 1, a transverse orientation of the porous fiber sheet was produced by the melt blown method using the manufacturing system 50A shown in Fig. 7. Moplen HP461Y, a polypropylene resin manufactured by POLYMIRAE Company Ltd., was used as the raw material for fibers. The polypropylene resin was melt-kneaded at 220 degrees C in an extruder, and then delivered to the die 51A at a discharge rate of 2.9 kg/h using a gear pump. The die 51A was previously heated to 260 degrees C. The die 51A including 484 resin nozzles 52A arranged in a row at a pitch of 0.72 mm in the Y direction was used. The discharge direction of each resin nozzle 52A was in the Z direction (more specifically in the vertical direction), and the diameter of the discharge port of each resin nozzle 52A was 0.2 mm. A pair of gas nozzles 53A was provided on both sides of each resin nozzle 52A in the X direction, and the air flow rate from each gas nozzle 53A was 200 m/sec. The vertical distance D (see Fig. 7) between the die 51A and the collector 55A was made to be 500 mm. The top surface of the collector 55A was a horizontal plane perpendicular to the Z direction. The transport speed V of the porous fiber sheet by the collector 55A was 0.2 m/min. Using this, a transversely oriented product with an average fiber diameter of 2.8 µm, a total thickness of 52 mm, and a solid occupancy of 1.6% was produced.

### [Example 2]

In Example 2, a transversely oriented product was produced under the same conditions as Example 1, except for the resin discharge amount, the vertical distance D, and the conveyance speed V. The resin discharge volume was 5.8 kg/h; the vertical distance D was 700 mm; and the transfer speed V was 1.0 m/min. In the conditions, a transversely oriented product was produced with an average fiber diameter of 1.8 µm, a total thickness of 13 mm, and a solid occupancy of 2.5%.

### [Example 3]

In Example 3, a transversely oriented product was produced under the same conditions as Example 1, except for the conditions of the air flow rate and the vertical distance D. The air flow rate was 125 m/sec, and the vertical distance D was 700 mm. In the conditions, a transversely oriented product was produced with an average fiber diameter of 2.4 µm, a total thickness of 28 mm, and a solid occupancy of 3.2%.

### [Example 4]

In Example 4, a transversely oriented product was produced under the same conditions as Example 1, except for the vertical distance D and the conveyance speed V. The vertical distance D was 700 mm, and the transfer speed V was 1.0 m/min. In the conditions, a transversely oriented product was produced with an average fiber diameter of 1.7 µm, a total thickness of 16 mm, and a solid occupancy of 0.8%.

### [Example 5]

In Example 5, a porous fiber sheet was produced in a longitudinal orientation by the melt blown method using the manufacturing apparatus 50 shown in Fig. 4. Moplen HP461Y, a polypropylene resin manufactured by POLYMIRAE Company Ltd., was used as the raw material for fibers. The polypropylene resin was melt-kneaded at 220 degrees C in an extruder, and then delivered to the die 51 at a discharge rate of 2.2 kg/h using a gear pump. The die 51 was heated to 250 degrees C in advance. The die 51 was used including 484 resin nozzles 52 arranged in a row at a pitch of 0.72 mm in the Y direction. The discharge direction of each resin nozzle 52 was in the Z direction (more specifically in the vertical direction), and the diameter of the discharge port of each resin nozzle 52 was 0.2 mm. A pair of gas nozzles 53 is provided on both sides of each resin nozzle 52 in the X direction, and the air flow rate from each gas nozzle 53 was set to 80 m/sec. In addition, the vertical distance D (see Fig. 4) between the die 51 and each collector 55 was made to be 400 mm. The distance between the two collectors 55 was constant at 55 mm, and the conveyance speed V of the porous fiber sheet by the two collectors 55 was set to 0.2 m/min. In the conditions, a longitudinally oriented product was produced with an average fiber diameter of 3.5 µm, a total thickness of 44 mm, and a solid occupancy of 1.5%.

### [Example 6]

In Example 6, a longitudinally oriented product was produced under the same conditions as those in Example 5, except for the die temperature, resin discharge volume, and transport speed V. The die temperature was 260 degrees C; the resin discharge rate was 2.9 kg/h; and the conveyance speed V was 0.3 m/min. In the conditions, a longitudinal product was produced with an average fiber diameter of 6.0 µm, a total thickness of 33 mm, and a solid occupancy of 1.7%.

### [Example 7]

In Example 7, a longitudinally oriented product was produced under the same conditions as those in Example 5, except for the resin discharge amount and the conveyance speed V. The resin discharge rate was 2.9 kg/h, and the transfer speed V was 0.3 m/min. In the conditions, a longitudinally oriented product was produced with an average fiber diameter of 7.6 µm, a total thickness of 45 mm, and a solid occupancy of 1.5%.

### [Example 8]

In Example 8, a longitudinally oriented product was produced under the same conditions as those in Example 5, except for the die temperature, resin discharge amount, vertical distance D, and conveyance speed V. The die temperature was 220 degrees C; the resin discharge volume was 2.9 kg/h; the vertical distance D was 300 mm; and the transfer speed V was 0.7 m/min. In the conditions, a longitudinal orientation product was produced with an average fiber diameter of 8.7 µm, a total thickness of 32 mm, and a solid occupancy of 0.6%.

### [Summary of Manufacturing Conditions for Porous Fiber Sheets]

Table 1 shows the manufacturing conditions for the porous fiber sheet obtained in Examples 1 to 8.

**[Table 1]**

| MANUFACTURING CONDITIONS | EXAMPLE 1 | EXAMPLE 2 | EXAMPLE 3 | EXAMPLE 4 | EXAMPLE 5 | EXAMPLE 6 | EXAMPLE 7 | EXAMPLE 8 |
|---|---|---|---|---|---|---|---|---|
| TEMPERATURE OF DIE (°C) | 260 | 260 | 260 | 260 | 250 | 260 | 250 | 220 |
| RESIN DISCHARGE AMOUNT (kg/h) | 2.9 | 5.8 | 2.9 | 2.9 | 2.2 | 2.9 | 2.9 | 2.9 |
| DIAMETER OF DISCHARGE PORT OF RESIN NOZZLE (mm) | 0.2 | 0.2 | 0.2 | 0.2 | 0.2 | 0.2 | 0.2 | 0.2 |
| AIR FLOW SPEED (m/sec) | 200 | 200 | 125 | 200 | 80 | 80 | 80 | 80 |
| DISTANCE BETWEEN DIE AND COLLECTOR (mm) | 500 | 700 | 700 | 700 | 400 | 400 | 400 | 300 |
| DISTANCE BETWEEN TWO COLLECTORS (mm) | - | - | - | - | 55 | 55 | 55 | 55 |
| CONVEYANCE SPEED OF COLLECTOR (m/min) | 0.2 | 1.0 | 0.2 | 1.0 | 0.2 | 0.3 | 0.3 | 0.7 |

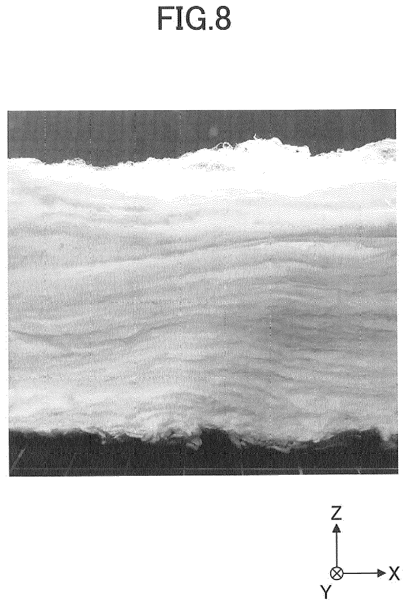

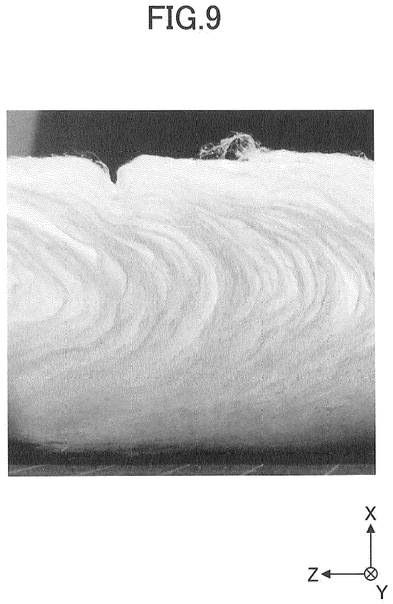

A representative example of a transversely oriented product obtained in Examples 1 to 4 is shown in Fig. 8, which is a transversely oriented product obtained in Example 1. The X direction, the Y direction, and the Z direction of Fig. 8 are the same as the X direction, the Y direction, and the Z direction of Fig. 7. As a representative example of the transversely oriented product obtained in Examples 5 to 8, the longitudinally oriented product obtained in Example 5 is shown in Fig. 9. The X direction, the Y direction, and the Z direction of Fig. 9 are the same as the X direction, the Y direction, and the Z direction of Fig. 4.

### [Evaluation Method for Porous Fiber Sheet]

The following measurements were performed on the porous fiber sheet obtained in Examples 1 to 8. The thickness of the skin layer was measured only for the longitudinal orientation of the porous fiber sheet obtained in Examples 5 to 8.

### <Total Thickness of Porous Fiber Sheet>

The total thickness of the porous fiber sheet was determined by placing the test piece cut from the porous fiber sheet on the horizontal mounting surface of the table, and measuring the thickness of five points near the center of the test piece with a thickness gauge as seen from above, thereby obtaining the arithmetic mean value of the measured values of the five points. The test pieces were cut into rectangular shapes of 100 mm long and 100 mm wide as seen from a direction perpendicular to the main surface of the porous fiber sheet. The test pieces were placed on a placement surface of the platform so that the cut surface of the test piece was perpendicular to the placement surface of the platform.

### <Skin Layer Thickness>

The thickness of the skin layer was measured by a thickness gauge at three points in each of the two skin layers of the test piece cut from the porous fiber sheet to obtain the arithmetic mean of the six measurement values. The test piece was cut into a rectangular shape of 100 mm in length and 100 mm in width, from the center in the Y direction of the porous fiber sheet (see Figs. 1 and 2), as seen in the direction perpendicular to the main surface of the porous fiber sheet. Note that, the arithmetic mean value of the thickness of the three points of one skin layer and the arithmetic mean value of the thickness of the three points of the other skin layer were the same within the range of error.

### <Average Fiber Diameter of Porous Fiber Sheet>

The average fiber diameter of the porous fiber sheet was measured by image analysis of SEM photographs (scanning electron micrographs) of test pieces cut from the porous fiber sheet. The test pieces were cut into a rectangular shape of 5 mm long and 10 mm wide as seen from a direction perpendicular to the main surface of the porous fiber sheet. A Pt film was deposited in advance using a sputtering device on the cross section for measuring the average fiber diameter of the test pieces.

The magnetron sputtering device MSP-15 manufactured by Vacuum Device Co. Ltd. was used as the sputtering device. The current value was 30 mA and the deposition time was 30 seconds.

As a scanning electron microscope (SEM), the proX PREMIUMI II manufactured by Phenom-World was used. The beam energy of the electron beam was 10 KeV. Electronic images were acquired using the Automated Image Mapping system of the Phenom-World Pro Suite phenom application system at a magnification of 1,500-fold while changing the imaging location.

A total of 1,000 fiber diameters were measured from 30 electronic images using image analysis, and the measured arithmetic mean fiber diameters were used as the mean fiber diameters. Image analysis was performed using the fiber metric function of the Pro Suite Phenom Application system from Phenom-World.

### <Percentage of Solids in Porous Fiber Sheets>

The solid occupancy of the porous fiber sheet was calculated as the value obtained by dividing the bulk density (BD) of the porous fiber sheet by the true density (TD) of the solid (BD/TD) and multiplying by 100 (BD/TD× 100) .

The bulk density (BD) of the porous fiber sheet was obtained by dividing the mass of the test piece cut from the porous fiber sheet by the volume of the test piece. The specimens were cut into 100.5 mm diameter circles in a direction perpendicular to the main surface of the porous fiber sheet. The test piece volume was measured by multiplying the circular area of 100.5 mm diameter by the total thickness of the porous fiber sheet. The mass of the test piece was measured by an electronic scale.

The true density of the fibers that constitute the solid was used as the true density of the solid. The true density of the polypropylene resin Moplen HP461Y, manufactured by POLYMIRAE Co. Ltd., used as the fiber material, was 920 kg/m³.

### <Attenuation Constant of Porous Fiber Sheet>

The attenuation constant (in Neper/m) of the porous fiber sheet was measured in accordance with JIS A 1405-2 using a vertical incidence sound absorption measurement system WinZacMTX manufactured by Japan Acoustic Engineering Co. Ltd. Specifically, a sound wave was perpendicularly emitted to a flat plane on one side of the cylindrical test piece used to measure the solid occupancy, and the attenuation constant of the sound wave was measured when the frequency of the sound wave was varied from 200 Hz to 1000 Hz at 20 Hz pitch, and the arithmetic mean of the measured values at 41 points was used as the attenuation constant of the porous fiber sheet.

Attenuation constants with frequencies less than 200 Hz were excluded from the measurement because of the large measurement error.

### <Characteristic impedance of porous fiber sheet>

The characteristic impedance (in N·s/m³) of the porous fiber sheet was measured in accordance with JIS A 1405-2 using the vertical incidence sound absorption coefficient measurement system WinZacMTX manufactured by Nihon Onkyo Engineering Co., Ltd. in the same manner as the attenuation constant. Specifically, each characteristic impedance (more specifically, the real part of the characteristic impedance) was measured when the sound wave frequency was varied from 200 Hz to 1000 Hz at a 20 Hz pitch by causing the sound wave to be incident perpendicularly to the flat plane on one side of the cylindrical test piece used to measure the solid occupancy, and the arithmetic mean of the values of 41 points was used as the characteristic impedance of the porous fiber sheet.

### [Evaluation Results for Porous Fiber Sheet]

Table 2 shows the evaluation results of the porous fiber sheet obtained in Examples 1 to 8.

**[Table 2]**

| EVALUATION ITEM | EXAMPLE 1 | EXAMPLE 2 | EXAMPLE 3 | EXAMPLE 4 | EXAMPLE 5 | EXAMPLE 6 | EXAMPLE 7 | EXAMPLE 8 |
|---|---|---|---|---|---|---|---|---|
| TOTAL THICKNESS (mm) | 52 | 13 | 28 | 16 | 44 | 33 | 45 | 32 |
| SKIN LAYER THICKNESS (mm) | - | - | - | - | 0.74 | 0.72 | 0.80 | 0.61 |
| SOLID OCCUPANCY (%) | 1.6 | 2.5 | 3.2 | 0.8 | 1.5 | 1.7 | 1.5 | 0.6 |
| AVERAGE FIBER DIAMETER (*µ*m) | 2.8 | 1.8 | 2.4 | 1.7 | 3.5 | 6.0 | 7.6 | 8.7 |
| ATTENUATION CONSTANT (Neper/m) | 8.0 | 13.7 | 15.7 | 5.4 | 10.5 | 10.1 | 9.2 | 2.7 |
| CHARACTERISTIC IMPEDANCE (N·s/m³) | 1185 | 1597 | 1614 | 685 | 876 | 793 | 761 | 691 |

The porous fiber sheets obtained in Examples 1 to 3 and Examples 5 to 7 had an average fiber diameter in the range from 0.5 *µ*m to 20 *µ*m and a solid occupancy S in the range from 1.3% to 8% or less, thereby obtaining a high attenuation constant (8 Neper/m or more). In contrast, the porous fiber sheet obtained in Examples 4 and 8 had a low attenuation constant because of its solid occupancy less than 1.3%.

Among Examples 1 to 3 and Examples 5 to 7, the porous fiber sheet of Examples 5 to 7 was a longitudinally oriented product, thereby obtaining a low characteristic impedance (1400 N·s/m³ or less). In contrast, the porous fiber sheets of Examples 1 to 3 were transversely oriented, and thus exhibited a high characteristic impedance. Furthermore, as is evident from the comparison between Example 1 and Example 5, when the mean fiber diameter and the solids occupancy are approximately the same, the attenuation constant can be improved more in the longitudinally oriented product than in the horizontally oriented product.

Although the embodiments of the porous fiber sheet and the like have been described, the present invention is not limited to the above-described embodiments and the like, and various alternations and modifications can be made within the scope of the subject matter of the present invention as claimed.

For example, the porous fiber sheets of the above embodiments are used as sound insulating materials to attenuate incoming sound waves, but may be used for applications other than sound insulating materials. Applications other than sound insulating materials include thermal insulating materials, vibration damping materials, or shock absorbing materials.

This application is based upon and claims priority to Japanese Patent Application No. 2017-227447 filed with the Japanese Patent Office on November 28, 2017, the entire contents of which are hereby incorporated by reference.

### DESCRIPTION OF THE REFERENCE NUMERALS

- 10: porous fiber sheet
- 11, 12: main surface
- 20: nonwoven layer
- 21, 22: skin layer

## Claims

1. A porous fiber sheet, comprising:
fibers having an average diameter of 0.5 µm or more and 20 µm or less,
wherein a solid percentage is 1.3% or more and 8% or less when a total volume of a solid and a gap in a unit volume is taken as 100%.

2. The porous fiber sheet as claimed in claim 1, wherein a total thickness of the porous fiber sheet is 1 mm or more and 100 mm or less.

3. The porous fiber sheet as claimed in claim 1, further comprising:
a plurality of nonwoven fabric layers separably and continuously arranged in a predetermined in-plane direction between two main surfaces opposite each other,
wherein each of the plurality of nonwoven fabric layers is composed of the fibers being intertangled as seen from the predetermined in-plane direction.

4. The porous fiber sheet as claimed in claim 3, further comprising:
two skin layers respectively provided on the two main surfaces opposite each other and composed of a plurality of fibers that are intertangled as seen from a thickness direction,
wherein the plurality of nonwoven fabric layers is provided between the two skin layers and formed to be continuous with the two skin layers, and
wherein a thickness of each of the two skin layers is 0.01 mm or more and 5 mm or less.

5. The porous fiber sheet as claimed in claim 1, wherein the porous fiber sheet is used as a sound insulating material to attenuate an incident sound wave.
